# EUROPEAN PATENT APPLICATION

(11) **EP 3 023 219 A2**
(43) Date of publication of application: **25.05.2016**
(21) Application number: 15194253.9
(22) Date of filing: 12.11.2015
(51) Int. Cl.: B29C 45/14, B29C 47/02, B29C 49/20, F16C 1/10

(54) **PROCESS FOR MANUFACTURING COATED BOWDEN CABLES, WHICH WILL NOT CONTAIN PHTHALATES, AND COATED BOWDEN CABLES MADE ACCORDING TO THE SAID PROCESS**

(30) Priority: 06.11.2014 SI 201400413
(71) Applicant: Eurel d.o.o., 2319 Poljcane (SI)
(72) Inventor: Golob, Andrej, 2230 Lenart (SI)
(74) Representative: Flak, Antonija

(57) **Abstract**

The invention belongs to the field of manufacturing coated cables as mechanical means for transmission of movement of said cables inside their flexible coatings, more precisely to the field of processes for manufacturing coatings for Bowden cables, which will not contain phthalates.

The essence of the process for manufacturing coated Bowden cables, which will not contain phthalates, is in that the plastic coating of the cable is made from a combination of polyvinylchloride and polyurethane in any mass ratio, preferably in the mass ratio 50:50, with any appropriate production technology, which may be extrusion, injection moulding or blow moulding.

## Description

### Field of the invention

The invention belongs to the field of manufacturing coated cables as mechanical means for transmission of movement of said cables inside their flexible coatings, more precisely to the field of processes for manufacturing coatings for Bowden cables, which will not contain phthalates.

### Technical problem

Bowden cables, which are widely used, but are primarily used in the automobile industry, are made of a metal (most commonly steel) spiral and are coated with approximately 0.1 mm thick plastic coating. Soft polyvinylchloride (PCV) is used for coatings, wherein phthalates are used as PVC plasticizers (softeners).

Phthalates are esters of phthalate acid and aliphatic alcohols. They are volatile liquids, which are added to polymers in plastic masses with the purpose of increasing flexibility of plastics. It has been established that phthalates have many harmful effects on humans and the entire environment. Phthalates function as hormone disruptors in human body, meaning that they affect the hormone balance in living organisms and thereby cause different anomalies in testicle tissue. Furthermore, they can reduce fertility of men and can potentially cause feminization of men. In addition, phthalates are known to be cancerogenic and it has been proven that they are involved in formation of malignant breast cancer and testicular cancer. Last but not least, phthalates in automobile industry have some unfavourable properties, among which the most important is migration and consequently sinking of outgoing vapours onto glass in a form of a mist. They are also harmful for the health of workers in production and assembly of Bowden cables. Therefore, an intense search is underway to find a suitable surrogate for PVC softening, which would be non-detrimental for human health and would at the same time be environmentally friendly.

The technical problem, which is solved by the present invention, is manufacturing coated Bowden cables, of which the plastic coating will not contain phthalates. The process and the resulting coated Bowden cables must enable safe use for humans and environment, wherein the coated cables must comply with prescribed mechanical, temperature, chemical and other physical requirements for Bowden cables, such as mechanical strength, elasticity and hardness, temporal stability, resistance to certain chemicals and aesthetic appearance linked with a smooth surface of the coated cable. The solution should also be price-competitive to older solutions, so that the manufacturing process of the coated Bowden cables will not be significantly more expensive than currently used procedures.

### State of the art

Replacing phthalates as plasticizers in the manufacturing process of plastic coatings for Bowden cables is not a simple task, as the coating must conform to multiple requirements mentioned above. Therefore, it is not surprising that there are no hits in databases for Bowden cables having coatings without phthalates.

However, several documents are available, which describe use of different PVC plasticizers. Patent US6111004 discloses polymeric plasticizers with a general formula (1) R^{a}-C(O)-(O-G-OC(O)-(CH₂)₄-₁₂-C(O))₁-₁₂-O-G-O-C(O)-R^{b}(1), wherein R^{a} and R^{b} each represent C₂-C₂₂ saturated alkyl moieties, wherein each G moiety is 1,2-propanediyl or 2-methylpropane-1,3-diyl so that both types of G moieties are present in the ratio 3:1 to 1:3.

Patent FR2892124 discloses use of azelates, trimellitates, sebacates, adipates, phthalates, citrates, benzoates, tallates, glutarates, fumarates, maleates, oleates, palmitates and acetates as plasticizers.

Patent applications EP2070977 and EP2070980 describe epoxy ethyl and/or isoamyl esters obtained from fatty acids of plant oils, which may be used as plasticizers. Epoxy bioesters are also disclosed in patent applications US2014316038 and US2014221538.

Patent DE20221388 discloses mixes of isomers of isoamyl benzoate and other esters as PVC plasticizers. Patent DE20121541 describes mixes of alicyclic polycarboxylic acids. Document DE10201201942 discloses use of trimellitic esters and polyethyl polyol esters.

Patent application WO2011011137 describes plasticizers obtained with esterification of keto acids obtained with acylation of aromatic compounds with cyclic anhydrides, which are suitable for phthalates free PVC products.

The above mentioned solutions allow avoiding use of phthalates as a softening agent for PVC or similar material, but significantly differ from the present invention. At the same time it should be emphasized that the above described solutions are not intended for applications in the automobile industry.

### Description of the solution

The essence of the process for manufacturing coated Bowden cables, which will not contain phthalates, is in that the plastic coating of the cable is made from a combination of polyvinylchloride and polyurethane in any mass ratio, preferably in the mass ratio 50:50, with any appropriate production technology, which may be extrusion, injection moulding or blow moulding.

The manufacturing process of coated Bowden cables according to the invention begins with preparation of polyvinylchloride (PVC) granulates and polyurethane (TPU) granulates, wherein three equivalent methods are possible. The first option is to select a mass ratio of the polyvinylchloride and polyurethane mix, which is followed by weighing the polyvinylchloride and polyurethane, mixing both components and drying. Drying or tempering of both components allows de-moisturizing of granulates, which is harmful in the process of extrusion, injection moulding or blow moulding. The second option of granulate preparation is that each granulate is dried individually, followed by selection of mass ratio of the polyvinylchloride-polyurethane mix, dosing of polyvinylchloride, dosing of polyurethane and mixing. The third option is to obtain from a supplier an already prepared mix with a pre-defined mass ratio of polyvinylchloride and polyurethane, which is then dried before making a coating for a Bowden cable. Mixing of granulates can be performed in any suitable manner, for example manual mixing, mixing with a snail-screw in a silo or mixing with container rotation.

The manufacturing process of coated Bowden cables according to the invention involves the following steps:
a) mixing of polyvinylchloride (PVC) granulates and polyurethane (TPU) granulates in any mass ratio, preferably in ratio 50:50;
b) drying of the prepared mix of PVC and TPU granulates according to a prescribed process in a suitable drying apparatus until a technologically required dryness is achieved;
c) transport and dosage of the dried mix of granulates into a machine for making plastic coatings of Bowden cables according to any of the standard procedures for making coatings: extrusion, injection moulding or blow moulding;
d) execution of extrusion, injection moulding or blow moulding, wherein the selected technology is performed according to standard protocols.

The manufacturing process of coated Bowden cables according to embodiment I involves the following steps:
a) drying of polyvinylchloride (PVC) granulates and polyurethane (TPU) granulates separately, according to a prescribed process in a suitable drying apparatus until a technologically required dryness is achieved;
b) after the drying is completed, the granulates of both materials, PVC and TPU, are mixed in any mass ratio;
c) transport and dosage of the dried mix of granulates into a machine for making plastic coatings of Bowden cables according to any of the standard procedures for making coatings: extrusion, injection moulding or blow moulding;
d) execution of extrusion, injection moulding or blow moulding, wherein the selected technology is performed according to standard protocols.

The manufacturing process of coated Bowden cables according to embodiment II involves the following steps:
a) obtaining compounded granulate of polyvinylchloride (PVC) and polyurethane (TPU), which was prepared according to a defined recipe and in a suitable ratio of both materials;
b) drying of the prepared mix of PVC and TPU granulates according to a prescribed process in a suitable drying apparatus until a technologically required dryness is achieved;
c) transport and dosage of the dried mix of granulates into a machine for making plastic coatings of Bowden cables according to any of the standard procedures for making coatings: extrusion, injection moulding or blow moulding;
d) execution of extrusion, injection moulding or blow moulding, wherein the selected technology is performed according to standard protocols.

The mass ratio of polyvinylchloride and polyurethane may be any possible ratio, wherein increasing the mass of polyurethane leads to more soft coating of the Bowden cable, while decreasing the mass of polyurethane leads to more hard coating of the Bowden cable. Mass ratios of both materials, which differ from the 50:50 ratio, enable adaptation of coated Bowden cable properties according to customers' requirements.

Coated Bowden cables according to the present invention are characterized by that the plastic coating is made of a combination of polyvinylchloride and polyurethane in any mass ratio of both materials, wherein the ratio depends on the intended use of the coated Bowden cable.

Coated Bowden cables manufactured according to any of the described processes are suitable for use in any industry, but they are preferably intended for use in automobile industry for making flexible cables for force or energy transmission. Characteristics of coated Bowden cables according to the invention such as hardness, elasticity, durability, resistance and similar, are the same as if the coatings contained phthalates, only that coated Bowden cables with the mix of polyvinylchloride and polyurethane are harmless for humans as well as environmentally friendly. With the process according to the invention a competitive price of the final product is ensured. In addition, the process can be simply implemented into the procedure of manufacturing coated Bowden cables, wherein coatings containing the mixture of polyvinylchloride and polyurethane ensures suitable hardness, elasticity, stability and resistance to certain chemicals as well as aesthetic appearance linked with a smooth surface of the coated cable.

During preparation of coated Bowden cables according to the present invention it was further observed that the mix of polyvinylchloride and polyurethane is also useful for manufacturing coatings for different products intended for general use, wherein the mass ratio of both materials, namely polyvinylchloride and polyurethane, depends on the required characteristics of coatings and the intended use of products.

## Claims

1. A process for manufacturing plastic coatings for Bowden cables, which will not contain phthalates, wherein the plastic coating for Bowden cables is made of a mixture of polyvinylchloride and polyurethane in any mass ratio.

2. The process according to claim 1, **characterized in that** it includes the following steps:
a) mixing of polyvinylchloride (PVC) granulates and polyurethane (TPU) granulates in any mass ratio, preferably in ratio 50:50;
b) drying of the prepared mix of PVC and TPU granulates according to a prescribed process in a suitable drying apparatus until a technologically required dryness is achieved;
c) transport and dosage of the dried mix of granulates into a machine for making plastic coatings of Bowden cables according to any of the standard procedures for making coatings: extrusion, injection moulding or blow moulding;
d) execution of extrusion, injection moulding or blow moulding, wherein the selected technology is performed according to standard protocols.

3. The process according to claim 2, **characterized in that** it includes the following steps:
a) drying of polyvinylchloride (PVC) granulates and polyurethane (TPU) granulates separately, according to a prescribed process in a suitable drying apparatus until a technologically required dryness is achieved;
b) after the drying is completed, the granulates of both materials, PVC and TPU, are mixed in any mass ratio.

4. The process according to claim 2, **characterized in that** it includes the following steps:
a) obtaining compounded granulate of polyvinylchloride (PVC) and polyurethane (TPU), which was prepared according to a defined recipe and in a suitable ratio of both materials;
b) drying of the prepared compounded polyvinylchloride (PVC) and polyurethane (TPU) granulates according to a prescribed process in a suitable drying apparatus until a technologically required dryness is achieved.

5. The process according to claims 2 and 3, **characterized in that** mixing may be performed in any suitable manner, for example manual mixing, mixing with a snail-screw in a silo or mixing with container rotation.

6. The process according to any of the preceding claims, **characterized in that** it is used for manufacturing coated Bowden cables intended for use in any industry, preferably for use in automobile industry for making flexible cables.

7. A Bowden cable coated with a plastic coating prepared with the process according to any of the preceding claims.

8. The Bowden cable with the plastic coating according to claim 7, **characterized in that** the plastic coating is made of a mixture of polyvinylchloride and polyurethane in any mass ratio.

9. The Bowden cable with the plastic coating according to claim 8, **characterized in that** the plastic coating is made of the mixture of polyvinylchloride and polyurethane in a mass ratio 50:50.
